Europäisches Patentamt

(19) **European Patent Office**

Office européen des brevets

(11) Veröffentlichungsnummer: **0 066 197**
**B1**

(12) **EUROPÄISCHE PATENTSCHRIFT**

(45) Veröffentlichungstag der Patentschrift:
31.07.85

(51) Int. Cl.⁴: **C 08 G 63/48**, C 09 D 3/64

(21) Anmeldenummer: **82104399.9**

(22) Anmeldetag: **19.05.82**

(54) **Lösungsmittelarme wasserverdünnbare Bindemittel für lufttrocknende Überzugsmittel.**

(30) Priorität: **29.05.81 AT 2403/81**

(43) Veröffentlichungstag der Anmeldung:
**08.12.82 Patentblatt 82/49**

(45) Bekanntmachung des Hinweises auf die Patenterteilung:
**31.07.85 Patentblatt 85/31**

(84) Benannte Vertragsstaaten:
**DE FR GB IT**

(56) Entgegenhaltungen:
**AT - B - 299 409**

**Die Akte enthält technische Angaben, die nach dem Eingang der Anmeldung eingereicht wurden und die nicht in dieser Patentschrift enthalten sind.**

(73) Patentinhaber: **Vianova Kunstharz Aktiengesellschaft,**
**A-8402 Werndorf (AT)**

(72) Erfinder: **Dworak, Gert, Dr., Dr. Robert Graftstrasse 25,**
**A-8010 Graz (AT)**
Erfinder: **Daimer, Wolfgang, Dipl.-Ing.,**
**Mariatrosterstrasse, A-8043 Graz (AT)**
Erfinder: **Lackner, Heinrich, Dipl.-Ing., Engerthgasse 3,**
**A-8045 Graz (AT)**

(74) Vertreter: **Pitter, Robert, Dr. et al,**
**Postfach 191 Leechgasse 21, A-8011 Graz (AT)**

BUNDESDRUCKEREI BERLIN

## Beschreibung

Die Erfindung betrifft wasserverdünnbare Bindemittel für lufttrocknende Überzugsmittel, deren Gehalt an organischem Hilfslösungsmittel unter 15% bezogen auf den Bindemittelanteil liegen. Die Erfindung betrifft weiterhin die Verwendung solcher Bindemittel zur Formulierung lufttrocknender Farben und Lacke, welche gewerblich, industriell oder für do it yourself-Zwecke eingesetzt werden können. Eine weitere Verwendung ist die Möglichkeit der Formulierung von forciert trocknenden Überzugsmitteln.

Unter der Bezeichnung »wasserverdünnbare Bindemittel« werden im Zusammenhang mit der vorliegenden Erfindung Polycarbonsäureharze verstanden, welche durch mindestens teilweise Salzbildung mit Ammoniak oder Aminen in eine wasserlösliche Form überführt wurden.

Die breite Einführung solcher wasserverdünnbarer Bindemittel zur allgemeinen Anwendung auf dem Gebiet des Oberflächenschutzes wird durch den anomalen Viskositätsverlauf der bisher bekannten Bindemittel erschwert (E. Hüttmann, Plaste u. Kautschuk 17, 202, 1970). Diese anomale Viskositätskurve beim Verdünnen der Bindemittel mit Wasser hat zur Folge, daß ausreichend tiefe Verarbeitungsviskositäten für die Tauch- und Spritzapplikation erst bei niedrigen Bindemittelgehalten erreicht werden. Daraus resultieren nur dünne Trocknungsfilmstärken, die eine mehrmalige Wiederholung des Beschichtungsvorganges erfordern. Es wurden zahlreiche Vorschläge zur Behebung dieses Mangels gemacht, die einerseits die Mitverwendung erheblicher Mengen organischer Hilfslösemittel bedingen, andererseits den Einbau von Polyalkylenglykolen vorsehen (DAS 1 203 407). Die erste Maßnahme läuft der eingangs erwähnten Zielsetzung der wasserlöslichen Bindemittel zuwider, die zweite führt zu Überzügen mit meist ungenügender Wasserbeständigkeit.

Aus der AT-PS 3 28 587 sind wäßrige Überzugsmittel für ofentrocknende Überzugsmittel bekannt, welche durch Mischung oder partielle Kondensation eines Polycarbonsäureharzes, einer Polyhydroxylverbindung und einer Härtungskomponente, z. B. einem Aminoharz erhalten werden. Durch geeignete Auswahl der Partner lassen sich auf diesem Weg Produkte herstellen, welche die obengenannten Nachteile bezüglich ihres Viskositätsverlaufs nicht mehr aufweisen.

Das beschriebene Verfahren führt jedoch bei Produkten mit höheren Anteilen von oxidativ trocknenden Ölfettsäuren, wie sie für lufttrocknende Bindemittel verwendet werden nicht mehr zum Ziel. Durch den höheren Anteil an hydrophoben Anteilen sind weitere wesentliche Kriterien zur Erzielung brauchbarer Produkte notwendig.

Aufgabe der vorliegenden Erfindung ist es nun, oxidativ bei Normaltemperatur oder gegebenenfalls erhöhter Temperatur trocknende wasserverdünnbare Bindemittel auf der Basis von Carboxylgruppen tragenden ölmodifizierten Alkydharzen, welche eine »Öllänge« zwischen 30 und 65% aufweisen, zu entwickeln. Unter »Öllänge« wird der Gewichtsprozentanteil oxidativ trocknender ungesättigter Fettsäuren bzw. Fettsäurereste in den Vorprodukten bzw. im Endprodukt verstanden.

Diese Aufgabe wird gemäß der vorliegenden Erfindung durch eine spezifische Auswahl der wesentlichen Kennzahlen für die Vorprodukte und das Endprodukt gelöst.

Die vorliegende Erfindung betrifft demgemäß lösungsmittelarme, nach teilweiser oder vollständiger Überführung in die Ammonium- und/oder Aminsalzform wasserverdünnbare Bindemittel für lufttrocknende Überzugsmittel auf der Basis von fettsäuremodifizierten Alkydharzen mit einer Öllänge von 30 bis 60%, einer Grenzviskositätszahl zwischen 10 und 15 ml/g (gemessen in 2%iger Lösung in N,N-Dimethylformamid, 20° C) und deren Gehalt an organischem Hilfslösungsmitteln unter 15%, bez. auf den Bindemittelanteil, liegt, welche durch partielle Kondensation bei erhöhter Temperatur von

(A) 30 — 70 Gew.-% eines filmbildenden fettsäuremodifizierten Alkydharzvorkondensats mit einer Säurezahl von 30 bis 200 mg KOH/g, einer Grenzviskositätszahl $\eta_A$ von 4,5 bis 8 ml/g und einer Öllänge von 5 bis 60% und

(B) 70 — 30 Gew.-% eines filmbildenden fettsäuremodifizierten Alkydharzvorkondensats mit einer Säurezahl unter 5 mg KOH/g, einer Hydroxylzahl von 50 bis 300 mg KOH/g, einer Grenzviskositätszahl $\eta_B$ von 8 bis 12 ml/g und einer Öllänge von 5 bis 60%

wobei das Verhältnis der Grenzviskositätszahlen $\dfrac{\eta_B}{\eta_A} = 1,4$ bis 2,7 betragen muß, erhalten wurden.

Die erfindungsgemäßen Bindemittel zeichnen sich — nach dem üblichen Zusatz von Sikkativen durch sehr rasche Trocknung bei Raumtemperatur hohem Glanz und ausgezeichneter Wasserfestigkeit der Überzüge aus. Die Verträglichkeit mit Pigmenten ist ausgezeichnet, so daß keinerlei Flokkungserscheinungen beobachtet werden. Diese Eigenschaftskombination war nicht vorhersehbar, zumal die Einzelkomponenten (A) und (B) des Kondensationsproduktes, obwohl selbst filmbildend, diese Eigenschaften nicht besitzen.

Durch die partielle Kondensation wird der Einbau der zunächst nichtwasserlöslichen Komponente (B) in ein wasserlösliches Gesamtharz erreicht. Überraschenderweise ist trotz des hohen Molekulargewichts — ausgedrückt durch die Grenzviskositätszahl von 10 bis 15 ml/g — und einer für das Gesamtsystem niedrigen Säurezahl von 25 bis 70, vorzugsweise 25 bis 40 mg KOH/g die Verdünnbarkeit mit Wasser so gut, daß Lacke mit hohem Festgehalt bei ausreichend tiefer Verarbeitungsviskosität hergestellt werden können, wodurch bei einmaligem Lackauftrag bereits Überzüge mit ausreichend hoher Trockenfilmstärke erreicht werden können. Die gegebenenfalls zugesetzten organischen Hilfslösungsmittel dienen im wesentlichen lacktechnischen Erfordernissen und sollen eine Menge von 15 Gew.-% bezogen auf die Menge des Bindemittels nicht überschreiten. Vorzugsweise werden weniger als 10 Gew.-% Hilfslösungsmittel eingesetzt.

Die Komponenten (A) und (B) entsprechen in ihrem Aufbau den bekannten Alkydharzen, wie sie z. B. in »Ullmanns Encyklopädie der Technischen Chemie«, 4. Auflage, Band 15 im Kapitel »Lacke«, beschrieben sind. Die Herstellungsverfahren sind ebenso wie die geeigneten Rohstoffe dem Fachmann bekannt. Anstelle der natürlichen Öle und deren Fettsäuren können für die Alkydharzvorprodukte auch in diesem Fall selbstverständlich auch synthetische trocknende Öle vom Typ der Carboxylgruppen tragenden Polydienöle eingesetzt werden. Weiteres können die Alkydharze entsprechend den in der Literatur bekannten Methoden z. B. durch Urethanisierung oder Einsatz von copolymerisierbaren Monomeren modifiziert sein.

Wesentlich für die erfindungsgemäßen Bindemittel sind die Bereiche der Kennwerte, wie sie in der nachfolgenden Zusammenstellung aufgeführt sind:

| | Komponente (A) | Komponente (B) |
|---|---|---|
| Säurezahl (mg KOH/g) | 30 — 200 | unter 5 |
| Hydroxylzahl (mg KOH/g) | 0 — 200 | 50 — 300 |
| Grenzviskositätszahl (ml/g) (2%ig in N,N-Dimethylformamid) | 4,5 — 8 | 8 — 12 |
| Öllänge (%) | 5 — 60 | 5 — 60 |
| Wasserverdünnbarkeit (nach vollständ. Neutralisation mit Triäthylamin) | unbegrenzt (klare bis opake Lösung) | unlöslich |
| Nach Sikkativierung filmbildend | ja | ja |

Für die Erzielung der gewünschten Ergebnisse ist die Einhaltung der angegebenen Bereiche der Grenzviskositätszahl von besonderer Bedeutung. Methodik der Bestimmung der Grenzviskositätszahl sowie die theoretischen Grundlagen sind in »Ullmanns Encyklopädie der Technischen Chemie«, 3. Auflage, Band II/1 im Kapitel »Viscosimetrie« beschrieben.

Eine »unbegrenzte Wasserverdünnbarkeit« ist dann gegeben, wenn eine mit Triäthylamin neutralisierte und auf einen Festkörpergehalt von 10 Gew.-% mit Wasser verdünnte Lösung nach 1 Stunde keinen unlöslichen Bodensatz gebildet hat.

Die Kondensation der Komponenten (A) und(B) erfolgt bei 90 bis 145°C, wobei darauf zu achten ist, daß der lösliche Zustand des Reaktionsgemisches nicht überschritten wird. Die Mengenverhältnisse der beiden Komponenten liegen zwischen 30 bis 70 Gew.-% für die Komponente (A) und 70 bis 30 Gew.-% für die Komponente (B). Wesentlich ist, daß der Quotient aus den Grenzviskositätszahlen der beiden Komponenten (A) und (B) sich wie 1 : 1,4 — 2,7 verhält, d. h. daß die Komponente (B) die 1,4 bis 2,7 fache Viskosität im Vergleich zur Komponente (A) aufweist und die Grenzviskositätszahl für das Endprodukt in einen Bereich zwischen 10 und 15 ml/g gebracht wird.

Bei dieser Kondensationsphase werden die gegebenenfalls in den Vorprodukten enthaltenen Lösungsmittel ganz oder teilweise durch Destillation aus der Reaktionsmasse entfernt.

Zur Neutralisation der Carboxylgruppen werden neben Ammoniak aliphatische tertiäre Alkyl- und Alkanolamine, vorzugsweise Triäthylamin oder N,N-Dimethyläthanolamin verwendet.

Die Applikation der gegebenenfalls pigmentierten Farben und Lacke erfolgt in der üblichen Weise durch Streichen, Spritzen, Tauchen, Fluten und analoge Auftragsverfahren.

Je nach Auswahl der Rohstoffe können mit Hilfe dieser Bindemittel korrosionsfeste Grundierungen oder Decklacke formuliert werden.

Die Trocknung der Überzugsmittel erfolgt üblicherweise nach entsprechender Sikkativierung bei Normaltemperatur. Selbstverständlich kann auch forciert bei 60 — 80°C getrocknet werden oder bei Kombination mit Amino- oder Phenolharzen die Filmbildung auch durch Einbrennen bei 140° — 180°C erfolgen.

Die folgenden Beispiele erläutern die Erfindung. Alle Angaben in Teilen oder Prozenten beziehen sich, sofern nichts anderes angegeben ist, auf Gewichtseinheiten.

### Herstellung der Komponente (A)

A1) 540 Tle Pentaerythrit, 480 Tle Isophthalsäure, 1150 Tle Leinölfettsäure und 178 Tle p.-tert.Butylbenzoesäure werden bei 220°C bis zu einer Säurezahl von unter 5 mg KOH/g umgesetzt und anschließend bei 110°C mit 471 Tlen Tetrahydrophthalsäureanhydrid reagiert. Sobald die Säurezahl auf ca. 70 mg KOH/g abgefallen ist, wird mit Toluol auf einen Festkörper von 95% und mit Methyläthylketon auf 85% verdünnt. Die Grenzviskositätszahl des Produktes beträgt 6,3 ml/g. Eine Probe ist nach Neutralisation mit Triäthylamin fast klar. Die »Öllänge« des Vorproduktes beträgt 44%.

A2) 540 Tle Pentaerythrit, 513 Tle Isophthalsäure, 575 Tle Leinölfettsäure, 575 Tle dehydratisierte Rizinenfettsäure, 178 Tle p.-tert.Butylbenzoesäure und 21 Tle Neopentylgkylol werden bei 220°C bis zu einer Säurezahl von unter 5 mg KOH/g umgesetzt und anschließend bei 160°C mit 595 Tlen Trimellithsäureanhydrid reagiert. Sobald die Säurezahl auf 124 mg KOH/g gefallen ist, wird bei 90°C mit Toluol auf einen Festkörpergehalt von 95% und mit Methyläthylketon auf 85% verdünnt. Die Grenzviskositätszahl liegt bei 6,7 ml/g. Eine Probe ist nach Neutralisation mit Triäthylamin fast klar. Die »Öllänge« des Vorproduktes beträgt 41%.

### Herstellung der Komponente (B)

B1) 540 Tle Pentaerythrit, 480 Tle Isophthalsäure, 530 Tle Leinölfettsäure, 530 Tle dehydratisierte Rizinusölfettsäure und 178 Tle p.-tert.Butylbenzoesäure werden bei 230°C bis zu einer Säurezahl von unter 5 mg KOH/g umgesetzt und anschließend auf eine Grenzviskositätszahl von 10,6 ml/g weiterkondensiert. Die Auslaufzeit nach DIN 53 211/20°C einer 50%igen Lösung in Monoäthylenglykolmonobutyläther beträgt 93 s. Das Vorprodukt weist eine errechnete Hydroxylzahl von 144 mg KOH/g auf.

B2) 32 Tle Isononansäure, 168 Tle Rizinenfettsäure, 136 Tle Pentaerythrit und 120 Tle Isophthalsäure werden bei 230°C bis zu einer Säurezahl von unter 5 mg KOH/g umgesetzt und anschließend auf eine Grenzviskositätszahl von 9,5 ml/g weiterkondensiert. Die Auslaufzeit nach DIN 53 211/20°C einer 50%igen Lösung in Monoäthylenglykolmonobutyläther beträgt 85 s. Das Vorprodukt weist eine errechnete Hydroxylzahl von 237 mg KOH/g auf.

### Beispiel 1

60 Teile Komponente B1) und 47 Tle (40 Tle Festharz) Komponente A1) werden unter Abdestillieren des Lösungsmittels auf 130°C erwärmt und so lange kondensiert bis die Grenzviskositätszahl 12,5 ml/g beträgt. Die Säurezahl sinkt von Anfangs 33 mg KOH/g auf 28,2 mg KOH/g. Man kühlt auf 85°C und verdünnt mit einer Mischung aus 11 Tlen Monoäthylenglykolmonobutyläther, 4,8 Tlen Triäthylamin und 111,2 Tlen Wasser (deionisiert) auf einen Festkörpergehalt von 44%. Der pH-Wert einer 10%igen wäßrigen Lösung liegt bei 9. Das Endprodukt weist eine »Öllänge« von 48% auf; das Verhältnis der Grenzviskositätszahlen der Vorprodukte beträgt $\dfrac{\eta_B}{\eta_A} = 1{,}68$.

### Beispiel 2

50 Tle Komponente B2) und 58,8 Tle Komponente (50 Tle Festharz) A2) werden unter Vakuum und Abdestillieren des Lösungsmittels auf 130°C erwärmt und so lange kondensiert bis die Grenzviskositätszahl 13,5 ml/g beträgt. Die Säurezahl des Kondensationsproduktes liegt bei 58 mg KOH/g. Man kühlt auf 80°C und verdünnt mit einer Mischung aus 9,2 Tlen Triäthylamin und 118 Tlen Wasser (deionisiert) auf einen Festkörpergehalt von 44%. Der pH-Wert einer 10%igen wäßrigen Lösung liegt über 8,5. Das Endprodukt weist eine »Öllänge« von 41% auf; das Verhältnis der Grenzviskositätszahlen der Vorprodukte beträgt $\dfrac{\eta_B}{\eta_A} = 1{,}41$.

### Beispiele 3 bis 5

In analoger Weise wie die Komponente A1 bzw. B1 werden weitere Vorprodukte hergestellt, deren Zusammensetzungen in der folgenden Tabelle zusammengefaßt sind.

| Komponente | Penta-erythrit | Iso-phthal-säure | Leinöl-fett-säure | Ricinen-ölfett-säure[x] | Tallöl-fett-säure[xx] | p.tert. Butyl-benzoe-säure | Neo-pentyl-glykol | Tetra-hydro-phthal-säure |
|---|---|---|---|---|---|---|---|---|
| A 3 | 540 | 397 | — | 855 | 855 | — | — | 471 |
| A 4 | 540 | 513 | 881 | — | — | 349 | 21 | 471 |
| A 5 | 540 | 349 | 855 | — | 855 | 107 | — | 471 |
| B 3 | 136 | 104 | 140 | 140 | — | — | — | — |
| B 4 | 540 | 513 | 178 | 357 | 178 | 399 | 21 | — |

x) dehydratisierte Rizinolfettsäure
xx)  Harzsäuregehalt ca. 2%

Diese Zwischenprodukte weisen folgende Kennzahlen auf:

| | A 3 | A 4 | A 5 | B 3 | B 4 |
|---|---|---|---|---|---|
| Säurezahl, mg KOH/g | 60 | 74 | 58 | < 5 | < 5 |
| Grenzviskositätszahl, ml/g | 5,8 | 6,5 | 4,7 | 10,8 | 10,7 |
| Öllänge, % | 58 | 34 | 57 | 58 | 35 |
| Hydroxylzahl, mg KOH/g | — | — | — | 198 | 153 |

Die Komponenten A und B werden in den unten angegebenen Verhältnissen analog Beispiel 2 kondensiert und nach Erreichen der angegebenen Grenzwerte mit Triäthylamin neutralisiert (Neutralisationsgrad ca. 100%) und mit deionisiertem Wasser auf einen Festkörpergehalt von 44% verdünnt.

| | Beispiel 3 | 4 | 5 |
|---|---|---|---|
| Mischungsverhältnis A/B (Teile) | 45/55 | 50/55 | 70/30 |
| Säurezahl mg KOH/g | 35 | 26 | 41 |
| Grenzviskositätszahl $[\eta]$ ml/g | 11,8 | 14,8 | 10,2 |
| Öllänge in % | 35 | 58 | 50 |
| $\dfrac{\eta_A}{\eta_B}$ | 1,65 | 1,86 | 2,23 |

Lacktechnische Prüfung der erfindungsgemäßen Bindemittel

Gemäß nachstehenden Rezepturen wurden zwei Lacke hergestellt. Die im ersten Abschnitt angegebenen Farbpasten wurden durch 1-stündige Dispergierung der Komponenten auf einer Perlmühle erhalten. Die Komplettierung erfolgte durch Zugabe der anderen Bestandteile im Schnellrührer in der angegebenen Reihenfolge.

| | | |
|---|---|---|
| | ,5 | |
| | 1,5 | |
| | | — |
| | - | 80 |
| | 20 | |
| | 142 | 142 |
| | 586,7 | — |
| | — | 586,7 |
| | 3,0 | |
| , 1%ig in WS) | 14,9 | |
| ,gen 10%ig in WS) | 14,9 | |
| ,olingen 2%ig in WS) | 14,9 | |
| .tel: | | |
| ,utmittel (Additol XL 297) | 7,7 | |
| ,rlaufmittel (Additol XL 121) | 1,5 | |
| ,Vasser deionisiert | 285,5 | 76,2 |
| Farbe I | 1071,1 | — |
| Farbe II | — | 861,6 |
| Lackfestkörper % | 31,9 | 39,7 |
| pH-Wert | 9,3 | 9,5 |
| Wassergehalt der Farbe, % | 58,7 | 48,7 |
| organisches Lösungsmittel und Amin | 9,4 | 11,6 |

Die Farben I und II wurden 24 Stunden nach der Herstellung sowohl nach Verdünnen mit $H_2O$ auf Applikationsviskosität auf Glasplatten als auch auf gereinigten Stahlblech durch Spritzen mit einer Farbspritzpistole appliziert. Die Prüfung der bei Zimmertemperatur (22°C/60% relative Luftfeuchtigkeit) getrockneten Filme ergab bei einer Trockenfilmstärke von ca. 30 μm folgende Ergebnisse:

6

|  | Farbe I | Farbe II |
|---|---|---|
| Klebfrei, nach Stunden | 3 1/1 | 1 1/2 |
| Pendelhärte nach KÖNIG (DIN 53 157), Sekunden | | |
| a) nach 24 Stunden | 24 | 49 |
| b) nach 1 Woche | 42 | 75 |
| c) nach 3 Wochen | 42 | 75 |
| d) nach 4 Wochen | 45 | 82 |
| Glanz 20° C, Gonioreflektometer | 69% | 86% |
| Gitter-Schnitt DIN 53 151 a) — d) | Gt 0 | Gt 0 |
| Erichsen-Tiefung DIN 53 156 a) — d) | über | 10 mm |
| Schlagtest (Joule) | 9,04 | 1,13 |

## Patenansprüche

1. Lösungsmittelarme, nach teilweiser oder vollständiger Überführung in die Ammonium- und/oder Aminsalzform wasserverdünnbare Bindemittel für lufttrocknende Überzugmittel auf der Basis von fettsäuremodifizierten Alkydharzen mit einer Öllänge von 30 bis 60%, einer Grenzviskositätszahl zwischen 10 und 15 ml/g (gemessen in 2%iger Lösung in N,N-Dimethylformamid / 20° C und deren Gehalt an organischem Hilfslösungsmittel unter 15%, bez. auf den Bindemittelanteil, liegt, welche durch partielle Kondensation bei erhöhter Temperatur von

(A) 30 — 70 Gew.-% eines filmbildenden fettsäuremodifizierten Alkydharzvorkondensats mit einer Säurezahl von 30 bis 200 mg KOH/g, einer Grenzviskositätszahl $\eta_A$ von 4,5 bis 8 ml/g und einer Öllänge von 5 bis 60% und

(B) 70 — 30 Gew.-% eines filmbildenden fettsäuremodifizierten Alkydharzvorkondensats mit einer Säurezahl unter 5 mg KOH/g, einer Hydroxylzahl von 50 bis 300 mg KOH/g, einer Grenzviskositätszahl $\eta_B$ von 8 bis 12 ml/g und einer Öllänge von 5 bis 60%

wobei das Verhältnis der Grenzviskositätszahlen $\frac{\eta_B}{\eta_A}$ = 1,4 bis 2,7 betragen muß, erhalten wurden.

2. Überzugsmittel nach Anspruch 1, dadurch gekennzeichnet, daß es eine Säurezahl von 25 bis 70, vorzugsweise 25 bis 40 mg KOH/g aufweist.

3. Überzugsmittel nach den Ansprüchen 1 und 2, dadurch gekennzeichnet, daß die Komponenten (A) und (B) bei 90 bis 145° C bis zur Erreichung der gewünschten Grenzviskositätszahl kondensiert wurden.

## Claims

1. Low-solvent binders for airdrying coating compositions water dilutable upon partial or total formation of an ammonium or amine salt thereof, on the basis of fatty acid modified alkyd resins with an oil length of 30 to 60%, an intrinsic viscosity between 10 and 15 ml/g (measurd on a 2% solution in N,N-dimethylformamide/20° C) with a content of organic auxiliary solvents of below 15% on binder content, which are obtained through partial condensation at elevated temperature of

(A) 30 — 70% by weight of a film forming fatty acid modified alkyd intermediate condensate with an acid value of 30 to 200 mg KOH/g, an intrinsic viscosity $\eta_A$ of 4.5 to 8 ml/g and an oil length of 5 to 60%, and

(B) 70 — 30% by weight of a film forming fatty acid modified alkyd intermediate condensate with an acid value of below 5 mg KOH/g, a hydroxyl value of 50 to 300 mg KOH/g, an intrinsic viscosity $\eta_B$ of 8 to 12 ml/g and an oil length of 5 to 60%,

wherein the relation of the intrinsic viscosities $\frac{\eta_B}{\eta_A}$ must be between 1.4 to 2.7.

7

2. Coating composition according to claim 1, characterised in that it has an acid value of 25 to 70, preferably 25 to 40 mg KOH/g.

3. Coating composition according to claims 1 and 2, characterised in that components (A) and (B) are condensed at 90 to 145°C, until the desired intrinsic viscosities are abtained.

## Revendications

1. Liants à faible teneur en solvants, diluables à l'eau après conversion partielle ou totale en sels d'ammonium et/ou d'amines, pour produits de revêtement séchant à l'air, à base de résines alkydes modifiées par des acides gras, ayant une longueur en huile de 30 à 60% et un indice de viscosité limite entre 10 et 15 ml/g (mesuré sur une solution à 2% dans le N,N-diméthylformamide à 20°C) et dont la teneur en solvants organiques auxiliaires est inférieure à 15%, par rapport à la proportion de liant, obtenus par condensation partielle à température élevée

(A) de 30 à 70% en poids d'un précondensat filmogène de résine alkyde modifié par des acides gras, ayant un indice d'acide de 30 à 200 mg KOH/g, un indice de viscosité limite $\eta_A$ de 4,5 à 8 ml/g et une longueur en huile de 5 à 60%, et

(B) de 70 à 30% en poids d'un précondensat filmogène de résine alkyde modifié par des acides gras, ayant un indice d'acide inférieur à 5 mg KOH/g, un indice d'hydroxyle de 50 à 300 mg de KOH/g, un indice de viscosité limite $\eta_B$ de 8 à 12 ml/g et une longueur en huile de 5 à 60%, le rapport des indices de viscosité limite $\dfrac{\eta_B}{\eta_A}$ devant aller de 1,4 à 2,7.

2. Produit de revêtement selon la revendication 1, caractérisé en ce qu'il présente un indice d'acide de 25 à 70, de préférence de 25 à 40 mg KOH/g.

3. Produit de revêtement selon les revendications 1 et 2, caractérisé en ce que l'on condense les composants (A) et (B) à une température de 90 à 145°C jusqu' à ce que l'on atteigne l'indice de viscosité limite désiré.